(19)

Europäisches
Patentamt
European
Patent Office
Office européen
des brevets

(11) **EP 3 890 141 A1**

(12) **EUROPEAN PATENT APPLICATION**
published in accordance with Art. 153(4) EPC

(43) Date of publication:
**06.10.2021 Bulletin 2021/40**

(21) Application number: **18942452.6**

(22) Date of filing: **05.12.2018**

(51) Int Cl.:
*H02J 7/00* (2006.01)

(86) International application number:
**PCT/CN2018/119380**

(87) International publication number:
**WO 2020/113472 (11.06.2020 Gazette 2020/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **SHENZHEN HEYTAP TECHNOLOGY CORP., LTD.**
**Shenzhen, Guangdong 518057 (CN)**

• **GUANGDONG OPPO MOBILE TELECOMMUNICATIONS CORP., LTD.**
**Dongguan, Guangdong 523860 (CN)**

(72) Inventor: **CHEN, Yichun**
**Dongguan, Guangdong 523860 (CN)**

(74) Representative: **Ipside**
**7-9 Allées Haussmann**
**33300 Bordeaux Cedex (FR)**

(54) **CHARGE PROMPTING METHOD AND DEVICE, MOBILE TERMINAL, AND COMPUTER-READABLE STORAGE MEDIUM**

(57) A charging prompting method and device, a mobile terminal, and a computer-readable storage medium. The method comprises: (S101) when a mobile terminal (510) is connected to a charger (520), determining a type of the charger (520); (S102) counting the number of times the mobile terminal (510) is connected to each different type of charger (520); and (S103) when the number of times the mobile terminal (510) is connected to a non-recommended type of charger (520) is excessive, issuing a prompt to remind a user to use a recommended type of charger (520). The method can effectively assist users in increasing the efficiency and stability of charging, and prolonging battery life.

```
                                                    ┌── S101
┌─────────────────────────────────────────────────┐
│  When a charger is connected, a type of the      │
│  charger may be determined                        │
└─────────────────────────────────────────────────┘
                        │
                        ▼                             ┌── S102
┌─────────────────────────────────────────────────┐
│  The cumulative historical number of times of    │
│  the type of the charger being connected may be  │
│  updated                                          │
└─────────────────────────────────────────────────┘
                        │
                        ▼                             ┌── S103
┌─────────────────────────────────────────────────┐
│  A prompt may be generated in response to the    │
│  cumulative historical number of times of the    │
│  charger in the non-recommended type reaching a  │
│  predetermined number of times                    │
└─────────────────────────────────────────────────┘
```

FIG. 1

## Description

## TECHNICAL FIELD

The present disclosure relates to the field of terminals, and in particular to a recharging prompting method, a device, a mobile terminal, and a computer-readable storage medium.

## BACKGROUND

With the development of science and technology, mobile phones, tablet PCs, laptops, smart bracelets, personal digital assistants, and so on, have emerged. By configuring a rechargeable battery in a mobile terminal, the mobile terminal may be detached from a power cable, and may be movable and portable. By connecting to a power adapter or charger to the mobile terminal, the mobile terminal can be charged at anytime and anywhere, such that the mobile terminal may be even more portable.

## SUMMARY OF THE DISCLOSURE

The present disclosure may provide a recharging prompting method, a device, a mobile terminal, and a computer-readable storage medium. A prompt may be generated when a charger in an un-recommended type is frequently used to charge a mobile terminal.

According to a first aspect, a charging prompting method is provided and includes following operations.

While the charger is connected, a type of a charger is determined.

A cumulative number of times of the charger in the type being connected is updated.

A prompt is generated in response to the cumulative number of times of a charger in a non-recommended type reaching a predetermined number of times.

According to a second aspect of the present disclosure, a charging prompting apparatus is provided and includes following components.

A determination module is configured to determine a type of a charger when the charger is connected.

An updating module is configured to update a cumulative number of times of the type of the charger being connected.

A prompting module is configured to prompt in response to a cumulative number of times of a charger in a non-recommended type reaching a predetermined number of times.

According to a third aspect of the present disclosure, a mobile terminal is provided and includes a memory, a processor, and a computer program. The computer program is stored in the memory and is capable of being executed by the processor. When the processor executes the computer program, the processor is configured to perform the operations as described in the first aspect of the present disclosure.

According to a fourth aspect of the present disclosure, a computer-readable storage medium is provided. The computer-readable storage medium stores a computer program. The computer program is executed by a processor to perform the operations as described in the first aspect.

According to a fifth aspect of the present disclosure, a computer program product is provided and includes a computer program. The computer program is executed by one or more processors to perform the operations as described in the first aspect.

## BRIEF DESCRIPTION OF THE DRAWINGS

In order to make the technical solution described in the embodiments of the present disclosure more clearly, the accompanying drawings for the description of the embodiments will be briefly described. Apparently, the drawings described below show only some of the embodiments. Any one skilled in the art may obtain other drawings based on these drawings, without making any inventive work.

FIG. 1 is a flow chart of a charging prompting method according to an embodiment of the present disclosure.
FIG. 2 is a correspondence table according to an embodiment of the present disclosure.
FIG. 3 is a statistical table according to an embodiment of the present disclosure.
FIG. 4 is an interface of a pop-up window according to an embodiment of the present disclosure.
FIG. 5 is a structural schematic view of a detection circuit according to an embodiment of the present disclosure.
FIG. 6 is another structural schematic view of a detection circuit according to an embodiment of the present disclosure.
FIG. 7 is a structural schematic view of a charging prompting apparatus according to an embodiment of the present disclosure.
FIG. 8 is a structural schematic view of a mobile terminal according to an embodiment of the present disclosure.

## DETAILED DESCRIPTION

In the following description, specific details, such as a particular system structure, a technique, and the like, are provided for the purpose of illustration and not for limitation, such that embodiments of the present application may be understood thoroughly. However, it should be understood that any skilled person in the art may implement the present disclosure in other embodiments without these specific details. In other cases, detailed descriptions of well-known systems, devices, circuits, and methods are omitted so that unnecessary details do not interfere with the description of the present disclosure.

In order to illustrate the above technical solution of the present disclosure, the following embodiments will be illustrated.

Embodiment 1

The present embodiment provides a charging prompting method that may be applied to any mobile terminal having a rechargeable battery that needs to be charged, such as a mobile phone, a tablet computer, a laptop, a smart bracelet, a personal digital assistant, and other mobile terminals.

Practically, depending on a type of the mobile terminal, a rechargeable battery in any type may be provided according to actual needs, such as, a lithium-ion battery.

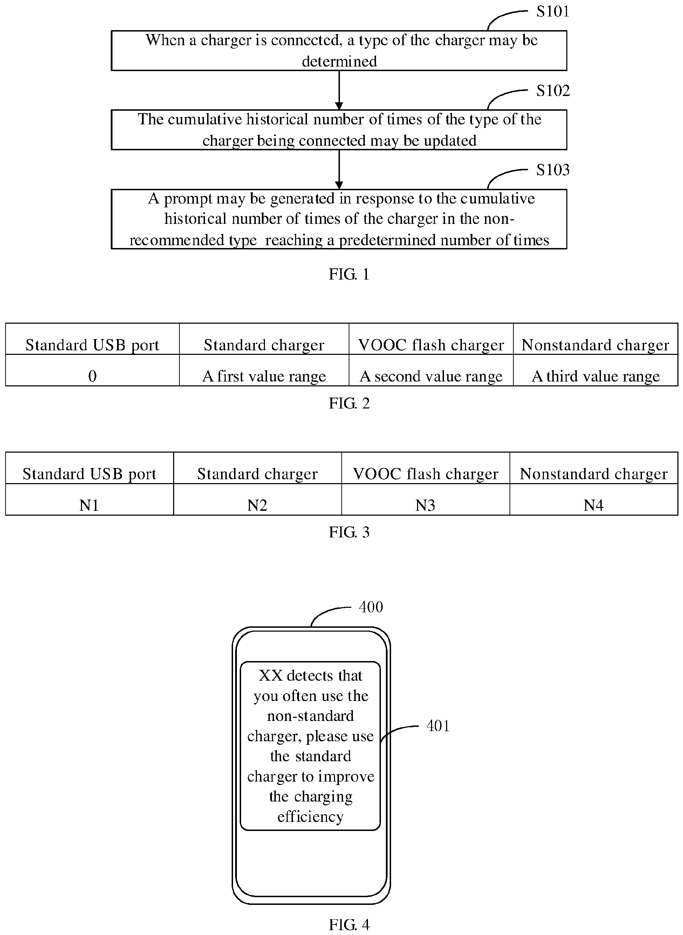

As shown in FIG. 1, the charging prompting method of the present embodiment may include following operations.

In an operation S101, while a charger is connected, a type of the charger may be determined.

Practically, in theory, a charger whose output voltage and current are within a range of a charging voltage and current supported by the mobile terminal may be connected for charging the mobile terminal.

In an embodiment, the operation S101 may include following operations.

In an operation S1011, while the charger is connected, an ID of the charger may be obtained.

In an operation S 1012, the type of the charger may be determined based on the ID of the charger.

Practically, an ID resistor (i.e. an identification resistor, an IDR) corresponding to the ID (Identification) of the charger may be embedded in the charger, and a resistance value of the ID resistor may the ID of the charger. The ID of the charger may be obtained by obtaining the resistance value of the ID resistor of the charger. ID resistors having different resistance values may be embedded in different types of chargers. The type of the charger may be determined based on the resistance value of the ID resistor of the charger.

In an embodiment, the operation S1012 may include following operations.

In an operation S 10121, a value range in which the ID of the charger falls may be determined based on the ID of the charger.

In an operation S10122, the type of the charger may be determined based on the value range in which the ID of the charger falls.

In an application, a resistance value range of the ID resistor embedded in a standard type of charger adapting to the mobile terminal may be constant. It may be determined whether the charger is in the standard type, based on the value range in which the ID of the charger falls.

In an embodiment, after the operation S10122, the method may include following operations.

It may be determined that the type of the charger is a standard USB port for a PC client in response to the ID of the charger being 0.

It may be determined that the type of the charger is the standard charger in response to the ID of the charger being within a value range of an ID of the standard charger.

It may be determined that the type of the charger is a non-standard charger in response to the ID of the charger being within a value range of an ID of the non-standard charger. A charger in a non-recommended type may include the standard USB port for the PC client and the non-standard charger.

In an application, a charging circuit corresponding to the standard USB port (SDP) of the PC (Personal Computer) client does not include the ID resistor. Therefore, in response to the ID of the charger being 0, the type of the charger may be determined as the standard USB port of the PC client.

In an application, the standard charger (Dedicated Charging Port, DCP) may be a charger provided by the manufacturer adapting to the mobile terminal, or a charger having same parameters as the charger provided by the manufacturer adapting to the mobile terminal. The non-standard charger (Other Charging Port, OCP) may be a charger having different parameters from the charger provided by the manufacture adapting to the mobile terminal. The standard charger may be a charger in a recommended type. The recommended type of charger may ensure a charging efficiency and charging stability, and may be adapted for the mobile terminal. The non-recommended type of charger may have a low charging efficiency and poor charging stability.

In an embodiment, the operation S10122 may further include following operations.

It is determined that the type of the charger may be a VOOC flash charger, in response to the ID of the charger being within a value range of an ID of the VOOC flash charger.

In an application, taking the VOOC flash charger (VOOC Charging Port, VCP) for charging may effectively improve the charging efficiency and ensure charging stability, and the VOOC flash charger may be the charger in the recommended type.

In an embodiment, before the operation S10122, the method may include following operations.

A correspondence relationship may be established between a value range corresponding to the ID of each of different types of chargers and the type of the charger.

Correspondingly, the operation S10122 may include following operations.

The type of the charger may be determined based on the value range in which the ID of the charger falls and the correspondence relationship.

In an application, the correspondence relationship may be a mapping relationship. The mapping relationship may be represented in a form of a correspondence table or a displayed look-up-table (LUT, look-up-table). Alternatively, the mapping relationship may be implemented by other data tables or Random Access Memory (RAM)-type storage media that have the same function as the displayed look-up-table for input data, i.e., looking up the corresponding output data based on the input data.

As shown in FIG. 2, a correspondence table indicating the correspondence relationship is exemplarily illustrated. A value 0 may correspond to the standard USB port of the PC client. A first value range may correspond to the standard charger. A second value range may correspond to the VOOC flash charger. A third value range may correspond to the non-standard charger.

In the operation S102, the cumulative number of times of the type of the charger being connected may be updated.

In an application, in response to the mobile terminal being detected to be connected to a certain type of charger once, the cumulative number of times of the certain type of charger may be updated.

In an embodiment, before the operation S102, the method may include following operations.

A statistical table for counting the cumulative number of times of each of different types of chargers being connected may be created.

Correspondingly, the operation S102 may include following operations.

In an operation S1021, the cumulative number of times of the type of the charger in the statistical table may be updated.

In an embodiment, the statistical table may be a one-dimensional array or a two-dimensional table.

When the statistical table is the two-dimensional table, a tuple of the two-dimensional table may be cumulative numbers of times of chargers in different types, and attribute of the two-dimensional table may be the type of the charger.

In an application, when the statistical table is the one-dimensional array, the cumulative numbers of times of different types of chargers may be arranged into the one-dimensional array in any order. For example, the cumulative numbers of times of each type of charger may be arranged in an order of: the standard USB port for the PC client, the standard charger, the VOOC flash charger, and the non-standard charger. The one-dimensional array {1, 3, 5, 2} may indicate that the cumulative number of times of the standard USB port for the PC client may be 1, the cumulative number of times of the standard charger may be 3, the cumulative number of times of the VOOC flash charger may be 5, and the cumulative number of times of the non-standard charger may be 2.

As shown in FIG. 3, a two-dimensional table is exemplarily illustrated. The standard USB port of the PC client may correspond to a value N1. The standard charger may correspond to a value N2. The VOOC flash charger may correspond to a value N3. The non-standard charger may correspond to a value N4. Each of the N1, the N2, the N3, and the N4 may be an integer greater than or equal to 0 and less than or equal to a predetermined number of times.

In an embodiment, the operation S1021 may include following operations.

The cumulative number of times corresponding to the type of the charger in the statistical table may be added by 1.

In an application, the mobile terminal may be connected to a certain type of charger once, i.e. a value of the cumulative number of the certain type in the statistical table may be added by 1.

In an embodiment, before the operation S102, the method may include following operations.

While the charger is connected, timing may be started.

While the charger is disconnected, timing may be terminated.

Correspondingly, the operation S102 may include following operations.

The cumulative number of times of the type of the charger being connected may be updated in response to a duration of the timing being longer than a predetermined duration.

In an application, when the mobile terminal is connected to a charger in a certain type for charging for a period of time longer than the predetermined duration, the charging may be determined as charging performed by a user actively and consciously. In this case, the cumulative number of times of the certain type may be updated. When the mobile terminal is connected to the charger in the certain type for charging for a period of time shorter than or equal to the predetermined duration, the charging may be determined as charging performed by a user unconsciously. In this case, the cumulative number of times of the certain type may not be updated.

In an application, the predetermined duration may be set to be any effective charging duration based on actual demands, for example, any time length between 100s (seconds) to 500s, such as, 300s.

In an operation S103, a prompt may be generated in response to the cumulative number of times of the charger in the non-recommended type reaching a predetermined number of times.

In an application, in response to the cumulative number of times of the non-recommended type of charger reaching the predetermined number of times, it may indicate that the user may frequently use the non-standard charger or the standard USB port of the PC client to charge the mobile terminal, having a low charging efficiency and poor charging stability. In this case, the prompt may be generated to suggest the user to use the standard charger to charge the mobile terminal. The prompt may be achieved by a pop-up window, a short message or voice. Specific content of the prompt may be set according to the actual needs, as long as the user may be reminded not to use the non-standard charger too frequently but suggested to use the standard charger. For example, for a mobile terminal that does not have a VOOC flash charging function, the content of the prompt may be: "XX detects that you often use the non-standard charger/the USB port of the PC client charging, please use the standard charger to improve the charging efficiency". The XX may be a name of the mobile terminal or a name of a voice assistant.

As shown in FIG. 4, a pop-up window is shown on a display interface of a mobile terminal 400 showing the prompt content. The prompt content displayed in the pop-up window 401 may be "XX detects that you often use the non-standard charger/the USB port of the PC client charging, please use the standard charger to improve the charging efficiency".

In an application, the predetermined number of times may be set according to actual needs, for example, any number between 5 and 30, such as, 20.

In an embodiment, the operation S103 may include following operations.

In response to the cumulative number of times of the non-recommended type of charger reaching the predetermined number of times, a prompt reminding the user to use the charger in the recommended type may be generated.

In an embodiment, after the operation S103, the method may include following operations.

The cumulative numbers of times for all types of chargers may be cleared.

Alternatively, the cumulative history numbers of times for the non-recommended type of charger may be cleared.

In an application, after providing the prompt to suggest the user to use the standard charger, the cumulative numbers of times for all types of chargers may be cleared, or the cumulative numbers of times for the non-recommended types of chargers may be cleared. The cumulative number of times for each type of charger connected to the mobile terminal may be re-counted.

In an embodiment, the charging prompting method may further include following operations.

In response to the cumulative number of times of a non-VOOC flash charger reaching the predetermined number of times, a prompt for reminding the user to use the VOOC flash charger may be generated.

In an application, in response to the cumulative number of times for the non-VOOC flash charger reaching the predetermined number of times, the prompt may be generated to suggest the user to use the VOOC flash charger to charge the mobile terminal to improve the charging efficiency and charging stability. The user may be reminded by the prompt in any forms, such as the pop-up window, the short message or the voice. Specific content of the prompt may be set according to actual needs, as long as the user is reminded to use the VOOC flash charger. For example, for the mobile terminal having the VOOC flash charging function, the prompt content may be: "XX detects that you often use the non-standard charger/the USB port for the PC client/the non-VOOC flash charger for charging, please use the VOOC flash charger to improve the charging efficiency". The XX may be the name of the mobile terminal or the name of the voice assistant.

In an embodiment, the charging prompting method may further include following operations.

In response to the cumulative number of times of the charger in the recommended type reaching the predetermined number of times, the cumulative numbers of times of all types of chargers may be cleared, or the cumulative number of times of the recommended type of charger may be cleared.

In an application, after providing the prompt suggesting the user to use the VOOC flash charger, the cumulative numbers of times of all types of chargers may be cleared, or the cumulative number of times of the non-recommended type of charger may be cleared. The cumulative number of times of each type of charger connected to the mobile terminal may be re-counted.

In an embodiment, the charging prompting method may include following operations.

Within a predetermined period of time, the cumulative number of times of any type of charger may be cleared in response to the cumulative number of any type of charger not reaching the predetermined number of times.

In an application, the predetermined period of time may be set according to actual needs, for example, any number of days between 30 to 90 days, for example, 60 days.

In an embodiment, before the operation S101, the method may include following operations.

In an operation S000, when the charger is connected, it may be detected whether the prompting function is turned off.

In an operation S100, when the prompting function is not turned off, the type of the charger may be determined.

In an embodiment, before the operation S000, the method may include following operations.

It may be detected whether the charger is connected.

Correspondingly, after the operation S000, the method may further include following operations.

It may be returned to detect whether the charger is connected when the prompting function is turned off.

In an application, the system of the mobile terminal may turn on the prompting function by default. When the prompting function is turned on, the system may update and record the cumulative number of times that the charger is connected to the mobile terminal by default in response to the mobile terminal being connected for charging. The system may provide the corresponding prompt in response to the cumulative number of times reaching the predetermined number of times. The user may turn off the prompting function by any human-machine interaction. When the prompting function is turned off, the system may stop updating and recording the cumulative number of times, and may not provide the corresponding prompt in response to the cumulative number of times reaching the predetermined number of times.

In an application, a button for turning on and off the prompting function may be set on a system setting interface of the mobile terminal, a main interface or a main body of the mobile terminal to allow the prompting function to be turned on and off by a one-touch operation.

According to the present embodiment, while the mobile terminal is connected to the charger, the type of the charger may be determined. The number of times of each of different types of chargers connected to the mobile terminal may be counted respectively. The prompt may be generated to remind the user to use the recommended type of charger in response to the mobile terminal being connected to the charger in the non-recommended type for too many times. In this way, the user may be assisted to improve the charging efficiency, enhance charging stability and extend the battery life.

It should be understood that, serial numbers of the operations in the above embodiments do not imply an order of execution, and the order of execution of the operations should be determined by its function and intrinsic logic, and shall not limit a process of performing the embodiments of the present disclosure.

Embodiment 2

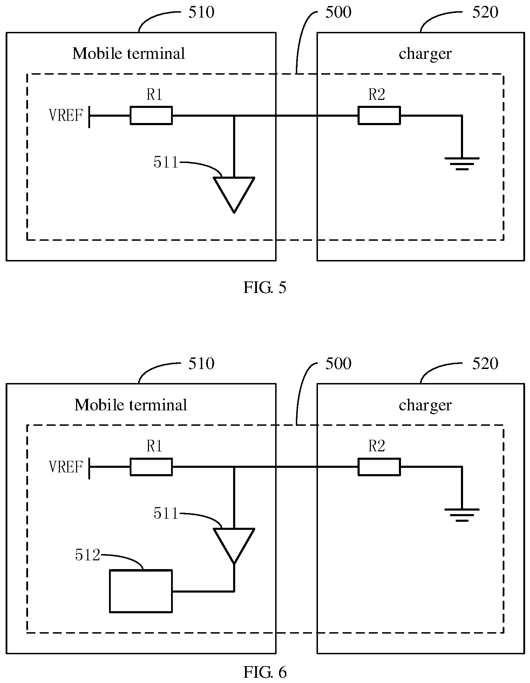

As shown in FIG. 5, a detection circuit 500 of the ID of the charger is exemplarily illustrated in the present embodiment. The detection circuit 500 may include a dividing resistor R1 and an analog-to-digital converter 511 configured in the mobile terminal 510. The detection circuit 500 may also include a resistor R2 configured in a charger 520. The resistor R2 may be the ID resistor corresponding to the ID of the charger 520.

As shown in Figure 5, connection between various components in the detection circuit 500 may be shown as follows.

An end of the dividing resistor R1 may be connected to a reference voltage VREF. When the mobile terminal 510 is connected to the charger 520, the other end of the dividing resistor R1 may be electrically connected to an input end of the analog-to-digital converter 511 and an end of the resistor R2. The other end of the resistor R2 may be connected to the ground.

In the present embodiment, the operation S101 of the Embodiment 1 may include following operations.

While the mobile terminal is connected to the charger, the resistance value of the resistor corresponding to the ID of the charger may be obtained based on the reference voltage, a voltage output from an output end of the analog-to-digital converter, and a resistance value of the dividing resistor. The resistance value of the resistor corresponding to the ID of the charger may be equal to the ID of the charger.

In the present embodiment, based on the schematic structure of the detection circuit 500 shown in FIG. 5, the equation implemented in the operation S101 in Embodiment 1 may be shown in the following.

$$R_{charger\_id} = R_{pull\_up} \bullet \frac{U_{adc}}{U_{ref} - U_{adc}}$$

The $R_{charger\_id}$ may indicate the resistance value of the resistor corresponding to the ID of the charger. The $R_{pull\_up}$ may indicate the resistance value of the dividing resistor. The $U_{adc}$ may indicate the voltage output from the output end of the analog-to-digital converter. The $U_{ref}$ may indicate the reference voltage.

As shown in FIG. 6, in the present embodiment, the detection circuit 500 may further include a processor 512, connected to the output end of the analog-to-digital converter 511.

In the present embodiment, while the mobile terminal is connected to the charger, the processor may be configured to obtain the reference voltage, the voltage output from the output end of the analog-to-digital converter and the resistance value of the dividing resistor. The processor may be configured to calculate the resistance value of the resistor corresponding to the ID of the charger based on the reference voltage, the voltage output from the output end of the analog-to-digital converter and the resistance value of the dividing resistor, based on the above equation, such that the ID of the charger may be obtained.

In an application, the processor may be a Central Processing Unit (CPU) of the mobile terminal, or a general-purpose processor, a Digital Signal Processor (DSP), an Application Specific Integrated Circuit (ASIC), a Field-Programmable Gate Array (FPGA) or other programmable logic devices, discrete gate or transistor logic devices, discrete hardware components, and so on. The general-purpose processor may be a microprocessor or any conventional processor.

In an application, the charging prompting method in Embodiment 1 may be performed by the processor 512, and the method may be implemented by the processor 512 when running a corresponding computer program.

Embodiment 3

The present embodiment may provide a charging prompting apparatus 7 for performing the operations in Embodiment 1 or Embodiment 2. The charging prompting apparatus 7 may be the mobile terminal as described in Embodiment 1 or Embodiment 2.

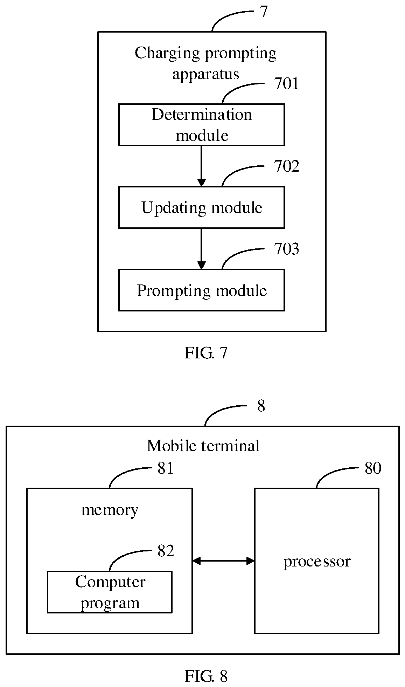

As shown in FIG. 7, the charging prompting apparatus 7 provided by the present embodiment may include following components.

A determination module 701 may be configured to determine the type of the charger, while the charger is connected.

An updating module 702 may be configured to update the cumulative historical cumulative number of times of the charger in the type being connected.

A prompting module 703 may be configured to prompt in response to the cumulative number of times of the charger in the non-recommended type reaching the predetermined number of times.

In an application, the determination module 701, the updating module 702, and the prompting module 703 may be software program modules in the processor of the mobile terminal. The processor may be a Central Processing Unit (CPU), or a general-purpose processor, a Digital Signal Processor (DSP), an Application Specific Integrated Circuit (ASIC), a Field-Programmable Gate Array (FPGA) or other programmable logic devices, discrete gate or transistor logic devices, discrete hardware components, and so on. The general-purpose processor may be a microprocessor or any conventional processor.

In an embodiment, the determination module 701 may include following components.

An obtaining unit may be configured to obtain the ID of the charger, while the charger is connected.

A determination unit may be configured to determine the type of the charger, based on the ID of the charger.

In an embodiment, the charging prompting apparatus 7 may further include following components.

A creation module may be configured to create a statistical table for counting the cumulative number of times of different types of chargers being connected.

Correspondingly, the updating module 702 may include following components.

A first updating unit may be configured to update the cumulative number of times corresponding to the type of charger in the statistical table.

In an embodiment, the charging prompting apparatus 7 may further include following components.

A timing module may be configured to start timing in response to the charger being connected and terminate the timing in response to the charger being disconnected.

Correspondingly, the updating module 702 may include following components.

A second updating unit may be configured to update the cumulative number of times of the charger in the type being connected in response to duration of the timing being longer than a predetermined duration.

In an application, the timing module may be a processor or an internal timer of the mobile terminal, and may be achieved by means of a crystal oscillator.

In an embodiment, the prompt module 703 may be configured to prompt the user to use the charger in the recommended type in response to the cumulative number of times of the charger in the non-recommended type being used reaching the predetermined number of times.

In an embodiment, the charging prompting apparatus 7 may further include following components.

A clearing module may be configured to clear the cumulative numbers of times of all types of chargers or to clear the cumulative number of times of the charger in the non-recommended type being connected.

In an embodiment, the clearing module may further be configured to perform following operations.

In response to the cumulative number of times that the charger in the recommended type reaching the predetermined number of times, the cumulative number of times of all types of chargers being used may be cleared, or the cumulative number of times of the charger in the recommended type being used may be cleared.

In an embodiment, the clearing module may further be configured to perform the following operations.

The cumulative number of times of any type of charger may be cleared, in response to the cumulative number of times of any type of charger not reaching the predetermined number of times within the predetermined period of time.

In an embodiment, the charging prompting apparatus 7 may further include following components.

A detection module may be configured to detect whether the prompting function is turned off, while the charger is connected.

The determination module 701 may further be configured to determine the type of the charger in response to the prompting function being not turned off.

In an embodiment, the detection module may further be configured to detect whether the charger is connected.

Correspondingly, the charging prompting apparatus 7 may further include following components.

A returning module may be configured to return to detect whether the charger is connected in response to the prompting function being turned off.

In the present embodiment, while the mobile terminal is connected to the charger, the type of the charger may be determined. The number of times of each of different types of chargers connected to the mobile terminal may be counted respectively. A prompt may be provided, in response to the mobile terminal being connected to the charger in the non-recommended type too many times, to remind the user to use the charger in the recommended type. In this way, the user may be assisted to improve charging efficiency, enhance charging stability and extend the service life of the battery.

It should be understood that the connection in all embodiments of the present disclosure may refer to electrical connection, and the electrical connection may be communicative connection for transmitting an electrical signal through a cable line, a data bus, and so on. The electrical signal may be a current signal, a voltage signal or a pulse signal, etc.

Embodiment 4

As shown in FIG. 8, the present embodiment provides a mobile terminal 8 including: a processor 80, a memory 81, and a computer program 82, such as a charge prompting program, stored in the memory 81 and able to be run by the processor 80. The processor 80 may implement the operations in each of the above-mentioned charging prompting method embodiments, such as steps S101 to S103 shown in FIG. 1, when executing the computer program 82. Alternatively, the processor 80 may implement the functions of each of the above-mentioned modules in each of the apparatus embodiments, such as the functions of the modules 701 to 703 shown in FIG. 7, when executing the computer program 82.

To be exemplary, the computer program 82 may be divided into one or more modules. The one or more modules may be stored in the memory 81 and executed by the processor 80 to complete the present disclosure. The one or more modules may be a series of computer program instruction segments capable of performing a particular function. The instruction segments may be configured to describe a process of executing the computer program 82 in the mobile terminal 8. For example, the computer program 82 may be divided into the determination module, the updating module and the prompting module, and a function of each module may be described in the following.

The determination module may be configured to determine the type of the charger, when the charger is connected.

The updating module may be configured to update the cumulative number of times of the charger in the type being connected.

The prompting module may be configured to provide a prompt in response to the cumulative number of times of the charger in the non-recommended type being used reaching the predetermined number of times.

The mobile terminal 8 may include, but is not limited to, a processor 80, a memory 81. It should be understood by those skilled in the art that Figure 8 is only an example of the mobile terminal 8 and does not limit the mobile terminal 8. The mobile terminal 8 may include more or fewer components than shown, or a combination of certain components, or different components. For example, the mobile terminal may also include an input and output device, a network access device, a bus, and so on.

The processor 80 may be a Central Processing Unit (CPU), a general-purpose processor, a Digital Signal Processor (DSP), an Application Specific Integrated Circuit (ASIC), Field-Programmable Gate Array (FPGA) or other programmable logic devices, discrete gate or transistor logic devices, discrete hardware components, and so on. The general-purpose processor may be a microprocessor or any conventional processor.

The memory 81 may be an internal storage unit of the mobile terminal 8, such as a hard drive or a memory of the mobile terminal 8. The memory 81 may also be an external storage device of the mobile terminal 8, such as a plug-in hard disk, a Smart Media Card (SMC), a Secure Digital (SD) card, a Flash Card, and so on, which are equipped on the mobile terminal 8. Further, the memory 81 may also include both internal storage units and external storage devices of the mobile terminal 8. The memory 81 may be configured to store the computer program and other programs and data required by the mobile terminal. The memory 81 may also be configured to temporarily store data that has been output or will be output.

It should be clear to those skilled in the art that, in order to provide a concise description, the above-mentioned division of each functional unit and module may be taken as an example. Practically, the above-mentioned functions may be assigned to different functional units and modules as needed, i.e., an internal structure of the device may be divided into different functional units or modules to implement all or some of the above-mentioned functions. Each functional unit, module in the present embodiment may be integrated in a processing unit, or each unit may physically be configured separately, or two or more units may be integrated in a single unit, and the integrated unit may be implemented either in the form of hardware or software functional units. In addition, names of the functional units and modules are only for the purpose of distinction and are not used to limit the scope of the present disclosure. Specific working processes of the units and modules in the above system may be referred to the corresponding process in the aforementioned method embodiment, and will not be repeated here.

In the above embodiments, the description of each embodiment has its own focus, and the parts that are not described in detail in one embodiment may be referred to the relevant descriptions of other embodiments.

A person of ordinary skill in the art may realize that the units and algorithmic operations of the embodiments described in conjunction with the embodiments disclosed herein may be implemented with electronic hardware, or a combination of computer software and electronic hardware. Achieving these functions in hardware or software may depend on particular applications and design constraints of the technical solution. The skilled person in the art may perform different methods to implement the described functions for each particular application, but such implementations should not be considered as beyond the scope of the present disclosure.

In the embodiments provided in the present embodiment, it should be understood that the disclosed device/mobile terminal and method may be implemented in other ways. For example, the device/mobile terminal embodiments described above are only exemplary. For example, the division of the modules or units described is performed based on logical functions, and may be divided in another way when actually implemented. For example, multiple units or components may be combined or may be integrated into another system, or some features may be omitted or not implemented. Further, the coupling or direct coupling or communicative connection shown or discussed may be an indirect coupling or communicative connection through some interfaces, devices or units. The connection may be electrical, mechanical or in other forms.

The units illustrated as separate components may or may not be physically separated, and the components displayed as units may or may not be physical units, i.e., they may be located in one place or may be distributed to a plurality of network units. Some or all of these units may be selected according to actual needs to achieve the purpose of the present embodiment.

In addition, each functional unit in each embodiment of the present disclosure may be integrated in a single processing unit, or each unit may be physically presented separately, or two or more units may be integrated in a single unit. The above integrated units may be implemented either in the form of hardware or in the form of software functional units.

The integrated module may be stored in a computer readable storage medium if implemented in the form of a software functional unit and sold or used as a stand-alone product. Based on such understanding, all or part of the processes in the method of the above embodiments of the present disclosure may be achieved by a computer program instructing the relevant hardware. The computer program may be stored in a computer readable storage medium. When the computer program is executed by a processor, the operations of each of the above method embodiments may be achieved. The computer program may include a computer program code, and the computer program code may be in the form of a source code, in the form of an object code, in the form of an executable file or in some intermediate form, and so on. The computer readable medium may include: any entity or device capable of carrying the computer program code, a recording medium, a USB flash drive, a removable hard disk, a diskette, an optical disk, a computer memory, a read-only memory (ROM), a random access memory (RAM), an electric carrier signal, a telecommunication signal, and software distribution media, and so on. It should be noted that content of the computer readable medium may be added or subtracted appropriately according to the requirements of legislation and patent practice in the jurisdiction. For example, in some jurisdictions, according to legislation and patent practice, computer readable medium does not include electric carrier signals and telecommunication signals.

The above described embodiments are intended only to illustrate, but not to limit, the technical solutions of the present disclosure.

Despite the detailed description of the present disclosure with reference to the foregoing embodiments, it should be understood by any ordinary skilled person in the art that the technical solutions recorded in the foregoing embodiments may be modified, or equivalent replacement for some of the technical features may be performed. These modifications or replacements do not make the essence of the technical solutions to depart away from the spirit and scope of the technical solutions of the embodiments of the present disclosure, and shall be included in the scope of protection of the present disclosure.

**Claims**

1. A charging prompting method, comprising:

   while a charger is connected, determining a type of the charger;
   updating a cumulative number of times of the charger in the type being connected; and
   generating a prompt in response to the cumulative number of times of a charger in a non-recommended type reaching a predetermined number of times.

2. The method according to claim 1, wherein the determining a type of the charger, while the charger is connected, comprises:

   while the charger is connected, obtaining an ID of the charger; and
   determining the type of the charger based on the ID of the charger.

3. The method according to claim 2, wherein the determining the type of the charger based on the ID of the charger, comprises:

   determining a value range in which the ID of the charger falls, based on the ID of the charger; and
   determining the type of the charger based on the value range in which the ID of the charger falls.

4. The method according to claim 3, wherein the determining the type of the charger based on the value range in which the ID of the charger falls, comprises:

   determining the type of the charger to be a standard USB port for a PC client in response to the ID of the charger being 0;
   determining the type of the charger to be a standard charger in response to the ID of the charger being within a value range of an ID of the standard charger;
   determining the type of the charger to be a non-standard charger in response to the ID of the charger being within a value range of an ID of the non-standard charger, wherein a non-recommended type of charger comprises the standard USB port for the PC client and the non-standard charger.

5. The method according to claim 4, wherein the determining the type of the charger based on the value range in which the ID of the charger falls, comprises:
   determining the type of the charger to be a VOOC flash charger in response to the ID of the charger being within a value range of an ID of the VOOC flash charger.

**6.** The method according to claim 5, comprising: prompting a user to use the VOOC flash charger in response to a cumulative number of times of a non-VOOC flash charger reaching a predetermined number of times.

**7.** The method according to claim 2, applied in a mobile terminal, wherein

the mobile terminal comprises a dividing resistor and an analog-to-digital converter, the charger comprises a resistor corresponding to the ID of the charger;
an end of the dividing resistor is connected to a reference voltage, and while the mobile terminal is connected to the charger, the other end of the dividing resistor is electrically connected to an input end of the analog-to-digital converter and to an end of the resistor corresponding to the ID of the charger, and the other end of the resistor corresponding to the ID of the charger is connected to the ground; and
the obtaining an ID of the charger, while the charger is connected, comprises:
while the mobile terminal is connected to the charger, obtaining a resistance value of the resistor corresponding to the ID of the charger based on the reference voltage, a voltage output from an output end of the analog-to-digital converter and the resistance value of the dividing resistor, wherein the resistance value of the resistor corresponding to the ID of the charger is equal to the ID of the charger.

**8.** The method according to claim 7, wherein an equation for obtaining a resistance value of the resistor corresponding to the ID of the charger based on the reference voltage, a voltage output from an output end of the analog-to-digital converter and the resistance value of the dividing resistor, is shown as follows:

$$R_{charger\_id} = R_{pull\_up} \bullet \frac{U_{adc}}{U_{ref} - U_{adc}};$$

wherein the $R_{charger\_id}$ represents the resistance value of the resistor corresponding to the ID of the charger; the $R_{pull\_up}$ represents the resistance value of the dividing resistor; the $U_{adc}$ represent the voltage output from the output end of the analog-to-digital converter; and the $U_{ref}$ represent the reference voltage.

**9.** The method according to claim 1, wherein before the updating a cumulative number of times of the charger in the type being connected, the method further comprises:

creating a statistical table for counting the cumulative number of times of each of different types of chargers;
the updating a cumulative number of times of the charger in the type being connected, comprises:
updating the cumulative number of times corresponding to the charger in the type in the statistical table..

**10.** The method according to claim 9, wherein the updating the cumulative number of times corresponding to the charger of the type in the statistical table, comprises:
adding the cumulative number of times corresponding to the charger in the type in the statistical table by 1.

**11.** The method according to claim 9, wherein the statistical table is a one-dimensional array or a two-dimensional table; and
when the statistical table is the two-dimensional table, a tuple of the two-dimensional table is the cumulative number of times of the charger in each of the different types, and attribute of the two-dimensional table is the type of the charger.

**12.** The method according to any one of claims 1 to 11, wherein before, the determining a type of a charger, while the charger is connected, the method further comprises:

while the charger is connected, detecting whether a prompting function is turned off; and
determining the type of the charger when the prompting function is not turned off.

**13.** The method according to 12, wherein

before the detecting whether a prompting function is turned off, when the charger is connected, the method further comprises: detecting whether the charger is connected; and
after the detecting whether a prompting function is turned off, while the charger is connected, the method further comprises: returning to detect whether the charger is connected when the prompting function is turned off.

**14.** The method according to any one of claims 1 to 11, wherein before the updating a cumulative number of times of the charger in the type being connected, the method further comprises:

while the charger is connected, starting timing;
while the charger is disconnected, terminating the timing; and
the updating a cumulative number of times of the charger in the type being connected comprises:

updating the cumulative number of times of the type of the charger in response to duration of the timing being longer than a predetermined duration.

15. The method according to any one of claims 1 to 11, wherein after the generating a prompt in response to the cumulative number of times of a charger in a non-recommended type reaching a predetermined number of times, the method further comprises:

clearing the cumulative number of times of all types of chargers; or
clearing the cumulative number of times of the charger in the non-recommended type.

16. The method according to any one of claims 1 to 11, wherein the generating a prompt in response to the cumulative number of times of a charger in a non-recommended type reaching a predetermined number of times, comprises:
prompting the user to use the charger in the recommended type in response to the cumulative number of times of the charger in the non-recommended type reaching the predetermined number of times.

17. The method according to any one of claims 1 to 11, further comprising:
clearing the cumulative number of times for chargers in all types, or clearing the cumulative number of times for the charger in the recommended type, when the cumulative number of times for the charger in the recommended type reaches a predetermined number of times.

18. A charging prompting apparatus, comprising:

a determination module, configured to determine a type of a charger while the charger is connected;
an updating module, configured to update a cumulative number of times of the charger in the type being connected; and
a prompting module, configured to prompt in response to the cumulative number of times of a charger in a non-recommended type reaching a predetermined number of times.

19. A mobile terminal, comprising a memory, a processor, and a computer program, wherein the computer program is stored in the memory and is capable of being executed by the processor, the processor is configured to perform the operations of the method according to any one of claims 1 to 17 when executing the computer program.

20. A computer-readable storage medium, storing a computer program, wherein the computer program is executed by a processor to perform the operations of the method according to any one of claims 1 to 17.

S101

| When a charger is connected, a type of the charger may be determined |
|---|

S102

| The cumulative historical number of times of the type of the charger being connected may be updated |
|---|

S103

| A prompt may be generated in response to the cumulative historical number of times of the charger in the non-recommended type reaching a predetermined number of times |
|---|

FIG. 1

| Standard USB port | Standard charger | VOOC flash charger | Nonstandard charger |
|---|---|---|---|
| 0 | A first value range | A second value range | A third value range |

FIG. 2

| Standard USB port | Standard charger | VOOC flash charger | Nonstandard charger |
|---|---|---|---|
| N1 | N2 | N3 | N4 |

FIG. 3

400

XX detects that you often use the non-standard charger, please use the standard charger to improve the charging efficiency

401

FIG. 4

510

500

520

Mobile terminal

charger

R1

R2

VREF

511

FIG. 5

510

500

520

Mobile terminal

charger

R1

R2

VREF

511

512

FIG. 6

7

Charging prompting apparatus

701

Determination module

702

Updating module

703

Prompting module

FIG. 7

8

Mobile terminal

81

memory

82

Computer program

80

processor

FIG. 8

**EP 3 890 141 A1**

## INTERNATIONAL SEARCH REPORT

| International application No. |
| --- |
| **PCT/CN2018/119380** |

**A.    CLASSIFICATION OF SUBJECT MATTER**

  H02J 7/00(2006.01)i

According to International Patent Classification (IPC) or to both national classification and IPC

**B.    FIELDS SEARCHED**

Minimum documentation searched (classification system followed by classification symbols)

  H02J

Documentation searched other than minimum documentation to the extent that such documents are included in the fields searched

Electronic data base consulted during the international search (name of data base and, where practicable, search terms used)

  WPI, EPODOC, CNPAT, CNKI: 充电, 标准, 非标准, 匹配, 标配, 次数, 数量, 计次, 提示, 提醒, charg+, standard, non-standard, match+, times, number, remind+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106300501 A (GUANGDONG OPPO MOBILE TELECOMMUNICATIONS CORP., LTD.) 04 January 2017 (2017-01-04)<br>  description, paragraphs [0044]-[0057], and figure 2 | 1-20 |
| A | CN 107317061 A (BEIJING ELECTRIC VEHICLE CO., LTD.) 03 November 2017 (2017-11-03)<br>  entire document | 1-20 |
| A | CN 101267120 A (ZTE CORPORATION) 17 September 2008 (2008-09-17)<br>  entire document | 1-20 |
| A | CN 201956711 U (SHANGHAI HUAQIN TELECOM TECHNOLOGY CO., LTD.) 31 August 2011 (2011-08-31)<br>  entire document | 1-20 |
| A | CN 102684270 A (HUAWEI TECHNOLOGIES CO., LTD.) 19 September 2012 (2012-09-19)<br>  entire document | 1-20 |
| A | CN 102938572 A (TCL COMMUNICATION (NINGBO) CO., LTD.) 20 February 2013 (2013-02-20)<br>  entire document | 1-20 |

☑ Further documents are listed in the continuation of Box C.      ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **23 August 2019** | **04 September 2019** |

| Name and mailing address of the ISA/CN | Authorized officer |
| --- | --- |
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

15

**EP 3 890 141 A1**

**INTERNATIONAL SEARCH REPORT**

International application No.

**PCT/CN2018/119380**

**C.    DOCUMENTS CONSIDERED TO BE RELEVANT**

| Category* | Citation of document, with indication, where appropriate, of the relevant passages | Relevant to claim No. |
|---|---|---|
| A | CN 105762863 A (VIVO COMMUNICATION TECHNOLOGY CO., LTD.) 13 July 2016 (2016-07-13)<br>      entire document | 1-20 |
| A | CN 105048555 A (TCL MOBILE COMMUNICATION TECHNOLOGY (NINGBO) CO., LTD.) 11 November 2015 (2015-11-11)<br>      entire document | 1-20 |
| A | CN 106684993 A (HUIZHOU TCL MOBILE COMMUNICATION CO., LTD.) 17 May 2017 (2017-05-17)<br>      entire document | 1-20 |
| A | US 2005112951 A1 (PHISON ELECTRONICS CORP. et al.) 26 May 2005 (2005-05-26)<br>      entire document | 1-20 |

Form PCT/ISA/210 (second sheet) (January 2015)

**INTERNATIONAL SEARCH REPORT**
Information on patent family members

International application No.

**PCT/CN2018/119380**

| Patent document cited in search report | | | Publication date (day/month/year) | Patent family member(s) | | | Publication date (day/month/year) |
|---|---|---|---|---|---|---|---|
| CN | 106300501 | A | 04 January 2017 | CN | 106300501 | B | 12 February 2019 |
| CN | 107317061 | A | 03 November 2017 | | None | | |
| CN | 101267120 | A | 17 September 2008 | CN | 101267120 | B | 24 August 2011 |
| CN | 201956711 | U | 31 August 2011 | | None | | |
| CN | 102684270 | A | 19 September 2012 | CN | 102684270 | B | 10 December 2014 |
| CN | 102938572 | A | 20 February 2013 | CN | 102938572 | B | 13 May 2015 |
| CN | 105762863 | A | 13 July 2016 | CN | 105762863 | B | 26 June 2018 |
| CN | 105048555 | A | 11 November 2015 | CN | 105048555 | B | 07 September 2018 |
| CN | 106684993 | A | 17 May 2017 | | None | | |
| US | 2005112951 | A1 | 26 May 2005 | US | 6916208 | B2 | 12 July 2005 |

Form PCT/ISA/210 (patent family annex) (January 2015)